# EUROPEAN PATENT APPLICATION

(11) **EP 1 903 549 A2**
(43) Date of publication of application: **26.03.2008**
(21) Application number: 07015996.7
(22) Date of filing: 14.08.2007
(51) Int. Cl.: G09G 3/288, G06F 1/26

(54) **Plasma television and power supply circuit**

(30) Priority: 19.09.2006 JP 2006252697
(71) Applicant: Funai Electric Co., Ltd., Daito-shi, Osaka 574-0013 (JP)
(72) Inventor: Ogawa, Takahiro, Daito-shi Osaka 574-0013 (JP)
(74) Representative: Grünecker, Kinkeldey, Stockmair & Schwanhäusser Anwaltssozietät

(57) **Abstract**

The present invention discloses a power supply circuit initiating an oscillation on a primary side of the power supply circuit upon receipt of a startup signal, comprising: a detecting module receiving an output voltage from the power supply circuit for detecting whether the output voltage is below a predetermined voltage; a power supply switching module turning OFF a main power supply of the power supply circuit when the detecting module determines the output voltage to be below the predetermined voltage; and a detection invalidating module invalidating the detecting of the detecting module from the receipt of the predetermined startup signal to the output voltage becomes above or equal the predetermined voltage.

## Description

### TECHNICAL FIELD

The present invention relates to a plasma television and a power supply circuit.

### BACKGROUND ART

In a power supply circuit, to prevent the supply voltage from becoming abnormal, there is generally provided a protection circuit for keeping the supply voltage within a predetermined range. For example, such an arrangement is made in which the output voltage from a power supply circuit is monitored by a microcomputer and, when the output voltage goes beyond a predetermined range, the microcomputer resets the power supply circuit.

As power supply circuits provided with such a protection circuit, there are known an arrangement in which a detected output voltage is compared with a steady operating signal, and a power supply apparatus is stopped only when a persistent abnormal condition is detected (disclosed, in JP-ANo. 2001-16847) and another arrangement in which a supply voltage is compared with two kinds of reference voltages and the operation of the power supply circuit is stopped when the supply voltage goes beyond the predetermined range (disclosed, in JP-A 2003-330408). Further, a technology for preventing various power supplies to plasma display panel (PDP) from going out-of-sequence is disclosed in Japanese Utility Model Registration

In the above mentioned power supply circuits in related art, there is one, depending on a resonance control device for controlling resonance on the primary side of the power supply circuit, that takes time until an oscillation at a sufficient voltage level is started after a power voltage supply to the power supply circuit has been started. In such a case, it sometimes occurs that the microcomputer starts monitoring before the output voltage rises to a predetermined voltage and determines that a power abnormality has occurred.

### DISCLOSURE OF THE INVENTION

The present invention discloses a projector comprising: a power supply circuit initiating an oscillation on a primary side of the power supply circuit upon receipt of a startup signal, comprising: a detecting module receiving an output voltage from the power supply circuit for detecting whether the output voltage is below a predetermined voltage; a power supply switching module turning OFF a main power supply of the power supply circuit when the detecting module determines the output voltage to be below the predetermined voltage; and a detection invalidating module invalidating the detecting of the detecting module from the receipt of the predetermined startup signal to the output voltage becomes above or equal to the predetermined voltage.

The present invention addresses the provision of a power supply circuit which may not cause a power abnormality even when the power supply circuit is such that takes time until an oscillation is started after the power supply of the power voltage has been started and also the provision of a plasma television equipped with such a power supply circuit.

According to the present invention, there is provided a configuration, which, in a power supply circuit initiating an oscillation on its primary side upon receipt of a startup signal comprising: a detecting module receiving an output voltage from the power supply circuit for detecting whether or not the output voltage is below the predetermined voltage; a power supply switching module turning OFF main power supply of the power supply circuit when the detecting module determines the output voltage to be below the predetermined voltage; and a detection invalidating module supplying the detection module with an alternative voltage equal to or above the predetermined voltage while after the receipt of the predetermined startup signal until the output voltage becomes equal to or above the predetermined voltage and, after the output voltage has become equal to or above the predetermined voltage, stopping supplying the alternative voltage and supplying the detection module with a voltage based on the output voltage.

According to the described configuration, the detection invalidating means inputs the alternative voltage to the detecting means until the output voltage from the secondary side becomes equal to or above the predetermined voltage, such that the output voltage is recognized to be equal to or above the predetermined voltage, and, hence, the detecting means recognizes the output voltage to be normal. On the other hand, when the output voltage on the secondary side becomes equal to or above the predetermined voltage, the detection invalidating means stops the outputting of the alternative voltage and the voltage based on the output voltage on the secondary side is input to the detecting means and, thus, the detecting means recognizes the output voltage to be normal.

The aforesaid "predetermined voltage" is defined to be a voltage sufficient to drive the destination equipment to which the power supply circuit supplies power and the aforesaid "predetermined time" is defined to be a time required until the output voltage exceeds the sufficient voltage after the power supply circuit has started the oscillation. The aforesaid "predetermined value" is defined to be the value of voltage allowing the detecting means to determine that the output voltage is above the aforesaid sufficient voltage: while an alternating voltage above the predetermined value is being input to the detecting means, the power supply switching means does not switch the main power supply to an OFF state. The aforesaid output voltage may be supplied from the same system or from another system separately provided for the purpose of detection by the detecting means. The aforesaid "outside" means a place not within the power supply circuit; it is meant that a voltage not dependent on the power supply conditions in the power supply circuit can be supplied from the outside. More specifically, the outside can provide a stable voltage even when the output voltage of the power supply circuit is below the predetermined voltage and, therefore, a power source in the stage preceding the power supply circuit, for example, is suited to the purpose.

According to the present invention as described above, even if the power supply circuit initiating an oscillation on its primary side upon inputting thereto of a predetermined startup signal may take a predetermined time until the output voltage from the secondary side becomes equal or above a predetermined voltage after the start of the oscillation, the detecting means does not detect an abnormality in the output voltage during this predetermined time and, accordingly, the power supply switching means does not turn OFF the main power source of the power supply circuit during this time.

To be more concrete, the configuration may be adapted such that the detecting means has first voltage dividing resistors having first end thereof supplied with the output voltage and second end thereof grounded and it detects the output voltage to be lower than the predetermined voltage when the voltage at the voltage dividing point of the first voltage dividing resistors is lower than a predetermined value, the detection invalidating means includes second voltage dividing resistors having first end thereof receiving an externally supplied predetermined voltage and second end thereof grounded, third voltage dividing resistors having first end thereof grounded, a zener diode having the anode thereof connected to second end of the third voltage dividing resistors and the cathode thereof supplied with the output voltage, the zener diode broken-down under the output voltage after elapse of the predetermined time from the start of the oscillation, and a transistor having the collector thereof connected to the voltage dividing point of the second voltage dividing resistors, the base thereof connected to the voltage dividing point of the third voltage dividing resistors, and the emitter thereof grounded, in which the voltage dividing point of the first voltage dividing resistors is connected with the voltage dividing point of the second voltage dividing resistors and the voltage at the voltage dividing point of the second voltage dividing resistors becomes equal to or above the predetermined value except when the zener diode is broken-down.

According to the above described configuration, when the output voltage is lower than the predetermined voltage, the externally applied voltage is adjusted by the second voltage dividing resistors to a predetermined voltage to be supplied to the detecting means. On the other hand, when the output voltage becomes equal to or above the predetermined voltage, the zener diode is broken-down to turn the transistor ON, whereby the externally applied voltage is pulled into the ground potential and, accordingly, the output voltage is adjusted to a predetermined value by the first voltage dividing resistors and input to the detecting means.

To be still more concrete, in Plasma television having a sustain voltage generator initiating an oscillation on its primary side upon inputting thereto of a startup signal and taking a predetermined time until a sustain voltage from its secondary side becomes an ordinary voltage after the oscillation is started, for displaying on a screen a video image based on a video signal input thereto, comprising: a rectifier circuit supplied with an AC voltage for generating a DC voltage; an address voltage generator having the DC voltage input to a primary winding of a transformer incorporated therein and generating an address voltage in a secondary winding for outputting the address voltage to a plasma display panel; the sustain voltage generator having the DC voltage input to a primary winding of a transformer incorporated therein and generating the sustain voltage and a monitor voltage, that are led out through conductors located in different tap positions of a secondary winding and different in voltage level, for outputting the sustain voltage to the plasma display panel and the monitor voltage to outside; a stand-by voltage generator having the DC voltage input to a primary winding of a transformer incorporated therein for generating a first erase voltage, a second erase voltage, and a scan voltage, that are led out from conductors located in different tap positions of a secondary winding and being different in voltage level, for outputting the voltages to the plasma display panel; a detector circuit including first voltage dividing resistors having first end supplied with the monitor voltage, a dividing point generating an inspection voltage and second end grounded; a relay circuit for switching between supply and cut-off of the AC voltage to the rectifier circuit; a microcomputer for instructing the relay circuit to switch to cut-off of the AC voltage to the rectifier circuit when the inspection voltage input at an Analog/Digital(A/D) terminal is lower than a predetermined voltage; and a detection invalidating circuit configured to comprise: second voltage dividing resistors having first end supplied with an externally supplied constant voltage equal to or above the predetermined voltage, a dividing point connected to the A/D terminal of the microcomputer and second end grounded; third voltage dividing resistors having first end grounded; a zener diode having an anode of connected to second end of the third voltage dividing resistors and a cathode supplied with the sustain voltage, the zener diode broken-down under the sustain voltage after elapse of a predetermined time from the start of the oscillation; and a transistor having a collector connected with a voltage dividing point of the second voltage dividing resistors, a base connected with a voltage dividing point of the third voltage dividing resistors, and an emitter grounded.

### BRIEF DESCRIPTION OF THE DRAWINGS

FIG 1 is an exemplary block diagram showing a schematic configuration of a plasma television equipped with a power supply circuit according to a present invention.
FIG 2 is an exemplary block diagram showing a power supply circuit and a microcomputer according to a present invention.
FIG 3 is an exemplary circuit diagram of a sustain voltage generator according to a present invention.
FIG 4 is an exemplary timing chart showing a voltage rise at each point of a sustain voltage generator according to a present invention.

### BEST MODES FOR CARRYING OUT THE INVENTION

An embodiment of the present invention will be described in the following order:
A. Schematic configuration of the present invention;
B. Configuration of a power supply circuit and the like;
C. Sustain voltage generator; and
D. Summary.

### A. Schematic Configuration of Present Invention

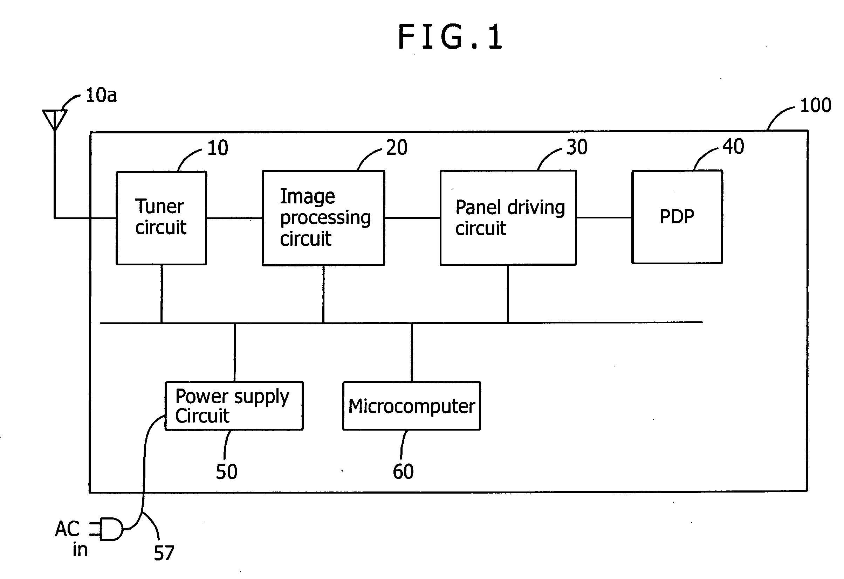

FIG 1 is a block diagram showing the schematic configuration of a plasma television equipped with a power supply circuit according to the present invention.

Referring to FIG 1, a plasma television 100 is generally configured of a plasma display panel (hereinafter, referred to as "PDP") 40, a video processing circuit 20, a tuner circuit 10, a microcomputer 60, a panel driving circuit 30, and a power supply circuit 50. The tuner circuit 10 receives a television broadcast signal through an antenna 10a and extracts a video signal and an audio signal, as intermediate frequency signals, from the television broadcast signal of a predetermined frequency band under the control of the microcomputer 60. The microcomputer 60 has a program execution environment made up of CPU, ROM, and RAM incorporated therein and executes overall control of the plasma television 100.

The video processing circuit 20, based on the video signal input thereto from the tuner 10, digitalizes the video signal and applies such video signal processing to the digitized video signal as color management, noise reduction, edge enhance, image quality adjustment, g-correction, panel timing, gain adjustment, and balance adjustment. The digital video signal output from the video processing circuit 20 is input to the panel driving circuit 30, a driving signal of the PDP 40 is generated in the panel driving circuit 30, and, based on the driving signal, a video image is displayed on the screen of the PDP 40.

The power supply circuit 50 is supplied with a commercial alternating-current voltage AC through a power cable 57 and generates from the supplied AC voltage a sustain voltage Vₛᵤₛ, address voltage V_{add}, first erase voltage Vset, second erase voltage Vₑ, and scan voltage V_{scan}, as supply voltages for driving PDP 40, and supplies the voltages to PDP 40. The power supply circuit 50 not only supplies voltages to PDP 40 but also supplies necessary voltages to other circuits constituting the plasma television 100 such as the microcomputer 60.

The sustain voltage Vₛᵤₛ and the address voltage V_{add} are respectively supplied to sustain electrodes and address electrodes of cells a large number thereof being disposed on the PDP 40 and the scan voltage V_{scan} is supplied to scan electrodes of the cells a large number thereof being disposed on the PDP 40. The PDP 40 of the present embodiment employs a planar discharge system in which a pulse voltage is applied between the scan electrode and the sustain electrode for the cell in which a preliminary discharge has been performed by an address electrode, so that a discharge in the direction of the display surface of the PDP 40 is produced. The first erase voltage Vset and the scan voltage V_{scan} are used for erasing electrical charges residual in the cell. The above mentioned various supply voltages are output to the PDP 40 in a specific order and at specific timing at the time when the plasma television 100 is started up.

With the above described configuration, a video image based on a television wave can be played back by the PDP 40. Not only a video image received through an antenna 10a, but also a television video image provided by CATV may be played back, or a video signal input from external equipment such as a DVD video deck may be played back. Playing back may be made only if the video processing circuit 20 matches each signal format. The television wave input to the tuner circuit 10 may be of a digital type or of an analog type.

### B. Configuration of power supply circuit and related circuits:

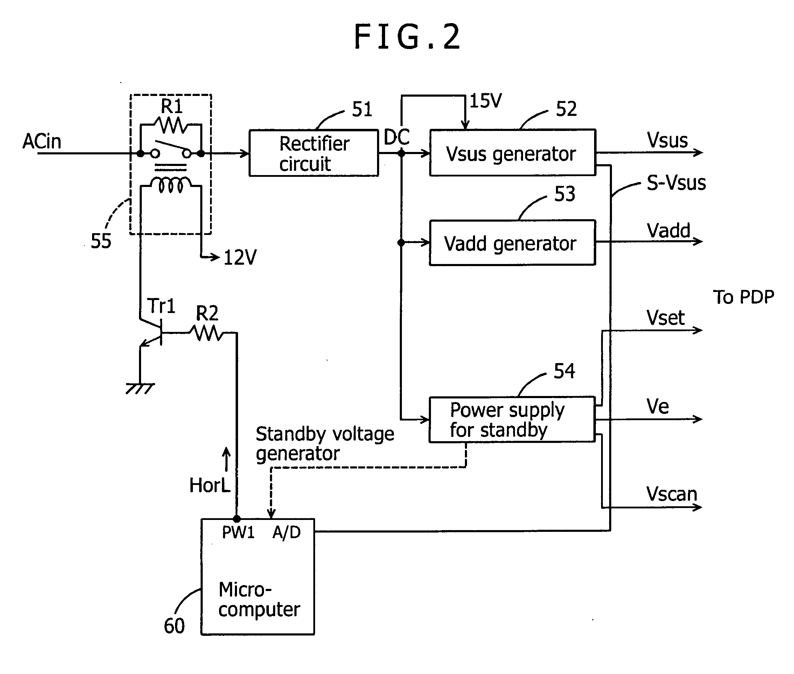

FIG 2 is a block diagram showing a power supply circuit 50, a microcomputer 60, and others.
In the power supply circuit 50, the rectifier circuit 51 receives an alternating-current voltage AC and converts the alternating-current voltage AC to a direct-current voltage DC at a predetermined level. The converted direct-current voltage DC is supplied in parallel to a sustain voltage Vₛᵤₛ generator 52, address voltage V_{add} generator 53, and stand-by voltage generator 54. Each of the voltage generators 52 - 54 incorporates therein a transformer with a specific turn ratio and adapted, when the direct-current voltage DC is input to the primary side of the transformed, to output from the secondary side of the transformer the sustain voltage Vₛᵤₛ, address voltage V_{add}, first erase voltage Vset, second erase voltage Vₑ, and scan voltage V_{scan} each thereof being set to their respective desired voltage level. In the present embodiment, the direct-current voltage DC input from the rectifier circuit 51 corresponds to the startup signal.

Each of the voltage generators 52-54 has a conductor outputting a inspection voltage S - Vₛₐₘₚ adjusted to a predetermined value (for example, 2.5V). As long as the direct-current voltage DC output from the secondary side of each of the voltage generators 52-54 is stabilized within a predetermined range, the inspection voltage S - Vₛₐₘₚ remains at a predetermined stabilized value. However, if the direct-current voltage DC output from each of the voltage generators 52-54 becomes unstable, the value of the same inspection voltage S - Vₛₐₘₚ also becomes unstable. That is to say, the inspection voltage S - Vₛₐₘₚ is a voltage for determining whether or not the voltage output from each of the voltage generators 52-54 is stably output. The inspection voltage S - Vₛₐₘₚ is output to the microcomputer 60 and the microcomputer 60 upon receipt of the inspection voltage S - Vₛₐₘₚ determines whether or not the level thereof is normal.

The microcomputer 60 is provided with an analog/digital (A/D) input port for inputting thereto the voltage output from the Vₛᵤₛ generator 52. In the present embodiment, a inspection voltage S - Vₛᵤₛ is A/D converted, as S - Vₛₐₘₚ, to be input to A/D input port of the microcomputer 60. In the present embodiment, the microcomputer 60 outputs a high (H) switching signal from the port PW1 when 1.5 - 3.5 V is input to the A/D input port and outputs a low (L) switching signal from the port PW1 when a voltage other than 1.5 - 3.5 V is input to the A/D input port.

A relay circuit 55 is provided in the stage preceding the rectifier circuit 51. That is, the main power supply is turned ON/OFF by the microcomputer 60 turning ON/OFF a switch in the relay circuit 55 depending on a switching signal output from the port PW1. To be more concrete, a transistor Tr1 for a switching operation to drive a relay coil of the relay circuit 55 is provided between the microcomputer 60 and the relay circuit 55 and the above mentioned switching signal is adapted to be applied to the transistor Tr1, so that, when the switching signal goes high (H), the switch in the relay circuit 55 is turned ON and the main power is supplied, and when the switching signal goes low (L), the switch in the relay circuit 55 is turned OFF and the main power supply is cut off. However, in the relay circuit 55, the input side and the output side of the main power supply are connected via a resistor R1, separately from the connection via the switch. By such a connection, a stand-by supply voltage at a predetermined level is allowed to be supplied to the microcomputer 60 even when the switch is turned off. The stand-by supply voltage is supplied to the microcomputer 60 through the stand-by voltage generator 54.

### C. Sustain voltage generator:

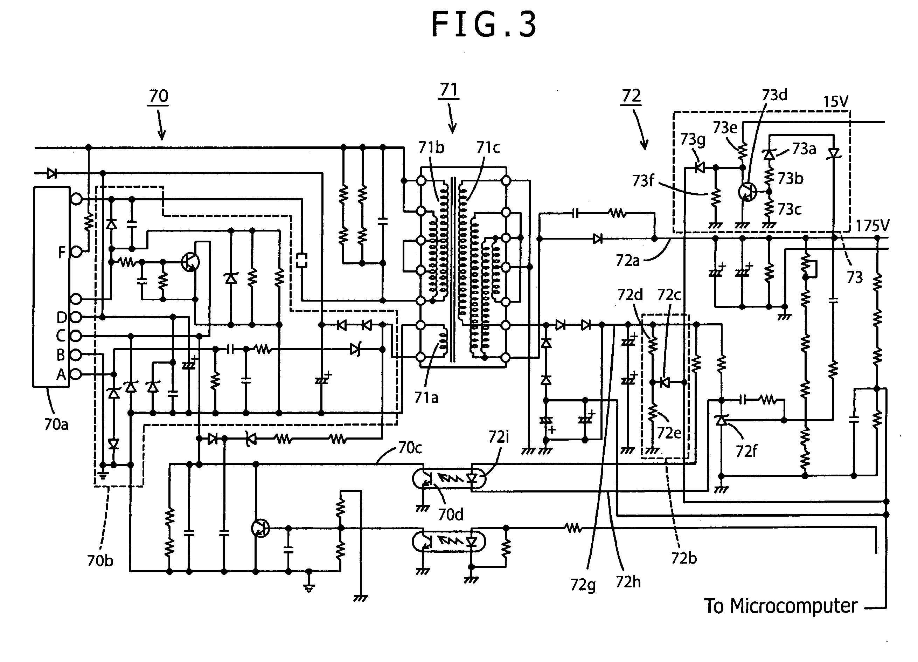

An example of a power supply circuit including a partial resonance control element will be described below taking a Vₛᵤₛ generator 52 as an example. FIG 3 is a circuit diagram of the Vₛᵤₛ generator 52.

The Vₛᵤₛ generator 52 is a partial resonance circuit and the same is made up of a primary side to which a voltage rectified by the rectifier circuit 51 is directly input and a secondary side adjusted to a desired voltage through a transformer for supplying the sustain voltage Vₛᵤₛ to the PDP.

On the primary side 70, there are provided a control IC 70a for properly adjusting the voltage on the primary side, a resonance circuit 70b, and a primary-side feedback circuit 70c for feeding back the voltage on the secondary side 72 to the control IC 70a. On the secondary side 72, there are provided a voltage monitor line 72g responsive to the output voltage from the secondary side for sending a signal to the primary-side feedback circuit 70c, an output line 72a from a necessary number of turns of the secondary winding 71c of the transformer 71 capable of outputting a predetermined output voltage, a detector circuit 72b dropping the voltage of the secondary side to a predetermined voltage thereby supplying the inspection voltage S - Vₛᵤₛ to the A/D terminal of the microcomputer 60, and a detection invalidating circuit 73 supplied with 15V from outside the Vₛᵤₛ generator 52 and enabled, based on the voltage, to supply a predetermined voltage to the A/D terminal.

The control IC 70a is provided with a zero current detecting terminal A as a trigger input terminal to which a trigger voltage from the resonance circuit 70b is input, a GND terminal B to which a ground voltage is supplied, a feedback terminal C to which a feedback signal is input through the primary-side feedback circuit 70c, a V_{cc} terminal D for receiving a power supply from a control winding 7 1 a, and a Vᵢₙ terminal F directly receiving the voltage undergoing AC rectification for supplying a current to V_{cc} only at the time of startup and having the current automatically cut off after the startup.

When a direct-current voltage DC is supplied from the rectifier circuit 51, the voltage is first applied to the Vᵢₙ terminal F and, thereupon, accumulation of electrical charges is started. Since the Vᵢₙ terminal F supplies a current at one micro ampere level to a startup circuit internal to the control IC 70a, it takes time to accumulate charges. This time constitutes a delay. Until the charges in the startup circuit reaches a predetermined amount, V_{cc} oscillates based on the voltage input from Vᵢₙ and, after the charges in the startup circuit has reached the predetermined amount, V_{cc} comes to be oscillated only by the power supply from the control wiring 71a. At the same time, the input from the Vin terminal F is automatically cut off and the supply of electrical charges from the Vᵢₙ terminal F is stopped.

Meanwhile, the control IC, based on a feedback signal input to the feedback terminal C, performs feedback control by PWM so that the output voltage on the secondary side may be suitably adjusted to a proper voltage and allows a collector terminal G to output a drive voltage to the main winding on the primary side of the transformer.

The control IC further detects the zero-current point on the secondary side by inputting a voltage of the control winding of the transformer to the zero current detecting terminal A through the resonance circuit and determines the ON-timing of the main switching element for switching the output from the collector terminal G

The primary-side feedback circuit 70c, formed by having the feedback terminal C of the control IC 70a grounded through a phototransistor 70d constituting a photocoupler, is turned ON when the phototransistor 70d has received, for a predetermined period of time, light beams from a light emitting diode 70i constituting the photocoupler provided on a secondary side feedback circuit 72h, to be described later, whereby a feedback signal is input to the feedback terminal C.

From the transformer 71 are output a Vₛᵤₛ output line 72a outputting a voltage of approximately 175V as a sustain voltage and a voltage monitor line 72g having the secondary side feedback circuit 72h and the detector circuit 72b connected thereto. The Vₛᵤₛ output line 72a is connected to the detection invalidating circuit 73 and an output line from the detection invalidating circuit 73 is connected to the detector circuit 72b to be described later.

The secondary side feedback circuit 72h has the light-emitting diode 72i, constituting the photocoupler, connected thereto with the anode thereof directed to the monitor line 72g. The cathode of the light emitting diode 72i is grounded through a zener diode 72f connected oppositely to the light emitting diode 72i. Thus, it is adapted such that the zener diode 72f is broken-down when the voltage of the monitor line 72g exceeds the beaking-down voltage of the zener diode 72f, whereby an electrical current flows through the light emitting diode 72i to emit light beams and the light beams are received by the phototransistor 70d.

The detector circuit 72b includes voltage dividing resistors 72d, 72e (first dividing resistors) having first end thereof connected to the voltage monitor line 72g and second end thereof grounded and a diode 72c having its cathode connected to the voltage dividing point of the voltage dividing resistors and its anode connected to the A/D terminal of the microcomputer 60. The anode of the diode 72c is also connected to the output line of the detection invalidating circuit 73. More specifically, the voltage of the voltage monitor line 72g is divided by the voltage dividing resistors 72d, 72e and the voltage at the dividing point is output as the inspection voltage S - Vₛᵤₛ. When the inspection voltage S - Vₛᵤₛ is lower than a predetermined voltage, the A/D terminal of the microcomputer 60 detects this voltage to output "L" so that the relay circuit 55 is turned OFF and therefore the power supply circuit 50 is stopped. On the other hand, when the inspection voltage S - Vₛᵤₛ is higher than the predetermined voltage, the A/D terminal of the microcomputer 60 detects this voltage and outputs "H" so that the relay circuit 55 is turned ON and therefore the power supply circuit 50 is not stopped. The values of the voltage dividing resistors 72d, 72e are set so that the voltage of the dividing point becomes 1.5 - 3.5V (intermediate value being 2.5V).

Thus, the microcomputer 60 supplied with the inspection voltage S - Vₛᵤₛ from the detector circuit 72b to thereby detect an abnormality of the Vₛᵤₛ voltage constitutes a detecting means. Further, the microcomputer 60 outputting "L" when it determines that the voltage S - Vₛᵤₛ is abnormal to thereby turn OFF the relay circuit constitutes a power supply switching means.

Now, while a predetermined time is taken before the control IC 70a starts an oscillation, if the microcomputer 60 detects a lower voltage than a predetermined voltage through the detector circuit 72b, the microcomputer 60 stops the power supply circuit 50. Accordingly, depending on the startup timing of the microcomputer 60, the power supply circuit 50 may be stopped before the control IC 70a starts the oscillation and then the power supply circuit 50 may not start. Therefore, in the present invention, a detection invalidating circuit 73 is provided so that the power supply circuit 50 may not be stopped before the control IC 70a starts up.

The detection invalidating circuit 73 includes a zener diode 73a, voltage dividing resistors 73b, 73c (third voltage dividing resistors), transistor 73d, voltage dividing resistors 73 e, 73f (second voltage dividing resistors), and diode 73 g; the circuit 73 is supplied with a voltage of 15V from outside the Vₛᵤₛ generator 52.

The zener diode 73a, of which the breaking-down voltage is approximately 150V, has its cathode connected with the Vₛᵤₛ output line and its anode connected with first end of the voltage dividing resistors 73b, 73c. Second end of the voltage dividing resistors 73b, 73c is grounded. The resistance values of the voltage dividing resistors 73b, 73c are so set that the voltage applied to the zener diode 73a may become approximately 150V when the output voltage of the Vₛᵤₛ output line 72a is approximately 175V The voltage dividing point of the voltage dividing resistors 73b, 73c is connected with the base of the transistor 73d. The serially connected voltage dividing resistors 73e, 73f, which are input from the outside and have a 15-volt voltage against the ground, have the voltage dividing point connected with the collector of the transistor 73d and the anode of the diode 73g. In other words, the voltage of 15V is supplied to the resistor 73e in the stage preceding the Vₛᵤₛ generator 52 of the power supply circuit 50. The emitter of the transistor 73d is grounded. The cathode of the diode 73g is connected with the anode of the diode 72c of the detector circuit 72b.

Therefore, when the voltage of the Vₛᵤₛ output line is lower than around 175V, the zener diode 73a does not be broken-down and no voltage is applied to the base of the transistor 73d. Hence, the same does not turn ON. Accordingly, the externally applied voltage of 15V is reduced, through the resistor 73e and the diode 73g, to 1.5V - 3.5V (intermediate value 2.5V) and this reduced voltage is input to the A/D input port of the microcomputer 60. Thus, the microcomputer 60 recognizes that the sustain voltage Vₛᵤₛ is 175V or above.

On the other hand, when the voltage of the Vₛᵤₛ output line 72a becomes 175V or above, the zener diode 73a is broken-down and turns ON the transistor 73d, whereby the externally applied voltage of 15V is pulled into the ground potential through the collector-emitter line of the transistor 73d. Therefore, a voltage based on the externally applied voltage of 15V is not supplied to the detector circuit 72b.

Thus, the detection invalidating circuit 73 constitutes a means to invalidate detection, in which, when the Vₛᵤₛ voltage is lower than 175V, a voltage of 1.5V - 3.5 V is output to the detector circuit 72b (i.e., to the A/D input port of the microcomputer 60) and, when the Vₛᵤₛ voltage is 175V or above, no voltage is output to the detector circuit 72b (i.e., to the A/D input port of the microcomputer 60).

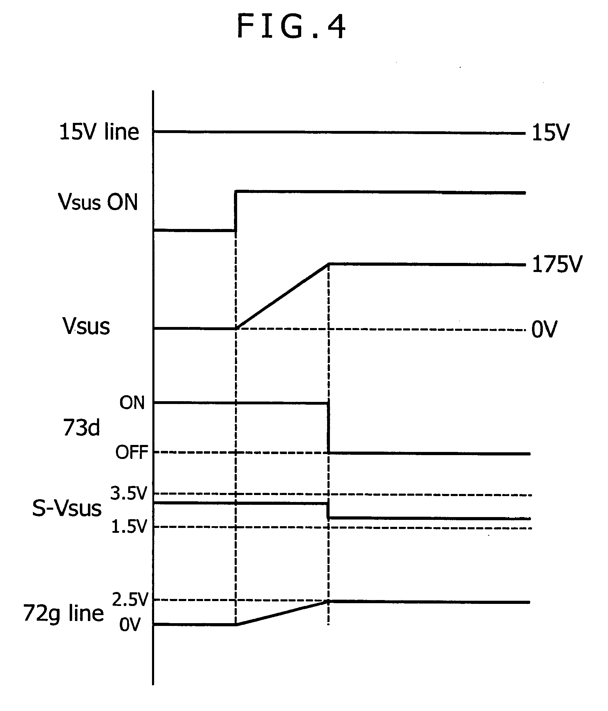

Now, with reference to the timing chart of FIG 4, operation of the overall circuit will be described.
First, when the power supply to the plasma television 100 is turned ON, the power supply circuit 50 is started up. Then, the relay circuit 55 is turned ON and a direct-current voltage DC rectified in the rectifier circuit 51 is input to the Vₛᵤₛ generator 52. At this time, outputting of the 15V line has already been started before the Vₛᵤₛ generator 52, and the voltage of 15V is kept to be supplied to the detection invalidating circuit 73 while the Vₛᵤₛ generator 52 is started up.

Upon turning ON of the Vₛᵤₛ generator 52, electrical charges are supplied to the Vᵢₙ terminal of the control IC 70a and electrical charges start to be stored in the startup circuit of the control IC 70a. At the same time V_{cc} starts to oscillate by using the stored charges as the power source. Then, the Vₛᵤₛ voltage output from the second side winding 71c of the transformer 71 gradually rises from 0V to 175V However, since the voltage of the Vₛᵤₛ output line 72a is lower than 175V while the output of the second side winding 71c is in the course of voltage increase, the zener diode 73a does not be broken-down. Hence, the externally applied voltage of 15V is reduced to 1.5V - 3.5V by the resistor 73e and supplied to the A/D input port of the microcomputer 60.

At the same time as the voltage Vₛᵤₛ starts increasing, the voltage at the voltage dividing point S of the voltage dividing resistors 72d, 72e also starts to increase from 0V to around 2.5V (1.5V - 3.5 V). However, the voltage is lower than the voltage supplied from the detection invalidating circuit 73, it is not supplied to the A/D input port of the microcomputer 60. More specifically, since the microcomputer 60 outputs "H" as the switching signal based on the detected voltage supplied from the detection invalidating circuit 73, the switch of the relay circuit 55 continues to be kept ON.

When the Vₛᵤₛ voltage reaches 175V, the zener diode 73a is broken-down, and hence a current flows to the ground through the voltage dividing resistors 73b, 73c to produce a voltage at the voltage dividing point of the resistors, and this voltage is supplied to the base of the transistor 73d to turn the same ON. Then, the externally supplied voltage of 15V is pulled into the ground potential and voltage supply from the detection invalidating circuit 73 to the detector circuit 72b is stopped. On the other hand, when the Vₛᵤₛ voltage reaches 175V, then the voltage at the voltage dividing point S is reached at 2.5V, so that the voltage at the voltage dividing point S is supplied to the A/D port of the microcomputer 60 as the inspection voltage S - Vₛᵤₛ and the microcomputer 60 keeps on outputting the switching signal at "H", and hence the switch of the relay circuit 55 is kept ON.

Thus, when a control IC, which takes time until an oscillation at a sufficient voltage is started after a supply of power voltage to the power supply circuit 50 has been started, is used, and then, even if monitoring by the microcomputer is started before the output voltage rises to a predetermined voltage, it is made possible to provide a power supply circuit in which a microcomputer does not determine that an abnormality has occurred in the power supply.

### D. Summary:

The detection invalidating circuit 73 is configured to include: the voltage dividing resistors 73e, 73f having first end thereof supplied with a voltage from a stage preceding the sustain voltage generator 52 and second end thereof grounded; the zener diode 73 a having the cathode thereof connected with the Vₛᵤₛ output line 72a and broken-down at a voltage around 150V; the voltage dividing resistors 73b, 73c having first end thereof connected with the anode of the zener diode 73a and second end thereof grounded; and the transistor 73d having the collector thereof connected with the voltage dividing point of the voltage dividing resistors 73e, 73f, the base thereof connected with the voltage dividing point of the voltage dividing resistors 73b, 73c, and the emitter thereof grounded, in which the voltage dividing point of the voltage dividing resistors 73e, 73f is connected with the voltage dividing point of the voltage dividing resistors 72d, 72e.

With the above described arrangement, the detection invalidating circuit 73 applies an alternative voltage to the detector circuit 72b until the voltage Vₛᵤₛ reaches 175V and, when the voltage Vₛᵤₛ reaches 175V or above, the same stops the supply of the alternative voltage. Accordingly, the alternative voltage indicating that the voltage Vₛᵤₛ is 175V or above is input to the A/D input port of the microcomputer 60 even when the voltage Vₛᵤₛ is lower than 175V and, therefore, the microcomputer 60 is prevented from outputting a switching signal at "L" to the relay circuit 55.

Although the invention has been described in considerable detail in language specific to structural features or method acts, it is to be understood that the invention defined in the appended claims is not necessarily limited to the specific features or acts described. Rather, the specific features and acts are disclosed as preferred forms of implementing the claimed invention. Therefore, while exemplary illustrative embodiments of the invention have been described, numerous variations and alternative embodiments will occur to those skilled in the art. Such variations and alternate embodiments are contemplated, and can be made without departing from the spirit and scope of the invention.

It is to be understood that the phraseology and terminology employed herein, as well as the abstract, are for the purpose of description and should not be regarded as limiting.

It should further be noted that throughout the entire disclosure, the labels such as left, right, front, back, top, bottom, forward, reverse, clockwise, counter clockwise, up, down, or other similar terms such as upper, lower, aft, fore, vertical, horizontal, proximal, distal, etc. have been used for convenience purposes only and are not intended to imply any particular fixed direction or orientation. Instead, they are used to reflect relative locations and/or directions/orientations between various portions of an object.

In addition, reference to "first," "second," "third," and etc. members throughout the disclosure (and in particular, claims) is not used to show a serial or numerical limitation but instead is used to distinguish or identify the various members of the group.

## Claims

1. Plasma television having a sustain voltage generator initiating an oscillation on a primary side of the sustain voltage generator upon inputting thereto of a startup signal and taking a predetermined time until a sustain voltage from a secondary side of the sustain voltage generator becomes an ordinary voltage after the oscillation is started, for displaying on a screen a video image based on a video signal input thereto, comprising:
a rectifier circuit supplied with an AC voltage for generating a DC voltage;
an address voltage generator having the DC voltage input to a primary address winding of a transformer and generating an address voltage in a secondary address winding for outputting the address voltage to a plasma display panel;
the sustain voltage generator having the DC voltage input to a primary sustain winding of a transformer and generating the sustain voltage and a monitor voltage, that are out put through conductors located in different tap positions of a secondary sustain winding and different in voltage level, for outputting the sustain voltage to the plasma display panel and the monitor voltage to outside;
a stand-by voltage generator having the DC voltage input to a primary stand-by winding of a transformer for generating a first erase voltage, a second erase voltage, and a scan voltage, that are output from conductors located in different tap positions of a secondary stand-by winding and being different in voltage level, for outputting the stand-by voltages to the plasma display panel;
a detector circuit including first voltage dividing resistors having first end supplied with the monitor voltage, a dividing point generating an inspection voltage and second end grounded;
a relay circuit for switching between turning ON and OFF of the AC voltage to the rectifier circuit;
a microcomputer for instructing the relay circuit to switch to turning OFF the AC voltage to the rectifier circuit when the inspection voltage input at an Analog/Digital (A/D) terminal is lower than a predetermined voltage; and
a detection invalidating circuit configured to comprise: second voltage dividing resistors having first end supplied with an externally supplied constant voltage equal to or above a predetermined voltage, a dividing point connected to the A/D terminal of the microcomputer and second end grounded; third voltage dividing resistors having first end grounded; a zener diode having an anode connected with second end of the third voltage dividing resistors and a cathode supplied with the sustain voltage, the zener diode broken down under the sustain voltage after elapse of a predetermined time from the start of the oscillation; and a transistor having a collector connected with a voltage dividing point of the second voltage dividing resistors, a base connected with a voltage dividing point of the third voltage dividing resistors, and an emitter grounded.

2. A power supply circuit initiating an oscillation on a primary side of the power supply circuit upon receipt of a startup signal, comprising:
a detecting module receiving an output voltage from the power supply circuit for detecting whether the output voltage is below a predetermined voltage;
a power supply switching module turning OFF a main power supply of the power supply circuit when the detecting module determines the output voltage to be below the predetermined voltage; and
a detection invalidating module invalidating the detecting of the detecting module from the receipt of the predetermined startup signal to the output voltage becomes above or equal the predetermined voltage.

3. The power supply circuit as set forth in claim 2 or 3 wherein:
the detecting module has first voltage dividing resistors having first end supplied with the output voltage and second end grounded and detects the output voltage to be below the predetermined voltage when a voltage at a voltage dividing point of the first voltage dividing resistors is below the predetermined voltage, and
the detection invalidating module is configured to include second voltage dividing resistors having first end supplied with an externally supplied constant voltage equal to or above the predetermined voltage and second end grounded, third voltage dividing resistors having first end grounded, a zener diode having an anode connected to second end of the third voltage dividing resistors and a cathode supplied with the output voltage, the zener diode broken-down under the output voltage after elapse of a predetermined time from the start of the oscillation, and a transistor having a collector connected with a voltage dividing point of the second voltage dividing resistors, a base connected with a voltage dividing point of the third voltage dividing resistors, and an emitter grounded, the voltage dividing point of the first voltage dividing resistors and the voltage dividing point of the second voltage dividing resistors are connected with each other.
